# EUROPÄISCHE PATENTSCHRIFT

(11) **EP 0 955 479 B1**
(45) Veröffentlichungstag und Bekanntmachung des Hinweises auf die Patenterteilung: **03.08.2005**
(21) Anmeldenummer: 98124386.8
(22) Anmeldetag: 22.12.1998
(51) Int. Cl.: F16B 43/00, F16B 5/02

(54) **Vorrichtung zum Verbinden von Bauteilen**
Fitting for connecting structural components
Dispositif d'assemblage d'éléments de construction

(30) Priorität: 04.05.1998 DE 29807967 U
(43) Veröffentlichungstag der Anmeldung: 10.11.1999
(73) Patentinhaber: Schwarzbich, Jörg, 33615 Bielefeld (DE)
(72) Erfinder: Schwarzbich, Jörg, 33615 Bielefeld (DE)
(74) Vertreter: TER MEER STEINMEISTER & PARTNER GbR

(56) Entgegenhaltungen:
- EP-A- 0 176 663
- DE-A- 4 112 618
- US-A- 3 778 957

## Beschreibung

Die Erfindung betrifft eine Vorrichtung zum Verbinden von Bauteilen, mit einer Verbindungsschraube und einem zwischen den zu verbindenden Bauteilen angeordneten, von der Verbindungsschraube durchsetzten Abstandshalter, der mit Hilfe eines durch die Einschraubbewegung der Verbindungsschraube angetriebenen Stellelements in der Länge verstellbar ist.

In EP 0 176 663 B1 wird eine Vorrichtung dieser Art beschrieben, bei der das Stellelement durch eine Distanzscheibe gebildet wird, die reibschlüssig auf dem Außengewinde der Verbindungsschraube gehalten ist. Diese Distanzscheibe stützt sich mit ihrer äußeren Breitseite an dem einen Bauteil und mit Gewindesteigungsflächen an Gegensteigungsflächen ab, die dem anderen Bauteil zugeordnet sind. Wenn die Distanzscheibe beim Einschrauben der Verbindungsschraube gedreht wird, ändert sich somit die axiale Position der Distanzscheibe. Bei geeignetem Schraubensinn der Gewindesteigungsflächen bewegt sich die Distanzscheibe axial entgegengesetzt zur Einschraubrichtung der Verbindungsschraube, so daß das eine Bauteil zwischen der Distanzscheibe und dem Kopf der Verbindungsschraube verspannt werden kann. Bei dieser Vorrichtung wird der Abstandshalter unmittelbar durch die Distanzscheibe und die zugehörigen Gegensteigungsflächen gebildet. Hierdurch wird ein herstellungstechnisch einfacher Aufbau erreicht. Ein Nachteil besteht jedoch darin, daß sich die Distanzscheibe beim Verspannen relativ zu dem eingespannten Bauteil verdreht, so daß es zu Kratzspuren oder Lackschäden an diesem Bauteil kommen kann und somit eine erhöhte Korrosionsgefahr besteht.

Aufgabe der Erfindung ist es, eine Vorrichtung der eingangs genannten Art zu schaffen, bei der eine Beschädigung der Bauteile durch den Abstandshalter vermieden wird.

Diese Aufgabe wird erfindungsgemäß dadurch gelöst, daß der Abstandshalter zwei drehfest an einem der Bauteile gehaltene, axial gegeneinander verschiebbare Stützkörper aufweist, die sich jeweils an einem der Bauteile abstützen und von denen mindestens eines zusammen mit dem Stellelement einen Spindeltrieb bildet.

Diese Lösung hat den Vorteil, daß sich der Abstandshalter mit zwei drehfest gehaltenen Stützkörpern an beiden Bauteilen abstützt, so daß an den Abstützflächen keine Relativverdrehungen auftreten, die zu Beschädigungen oder einem erhöhten Reibungswiderstand führen könnten.

Vorteilhafte Ausgestaltungen der Erfindung ergeben sich aus den Unteransprüchen.

In einer bevorzugten Ausführungsform werden durch das Stellelement und jeden der beiden Stützkörper zwei Spindeltriebe gebildet, die sich in ihrer Gewindesteigung und/oder ihrem Schraubensinn unterscheiden. Bei entgegengesetztem Schraubensinn der Spindeltriebe wird so bei gegebener Gewindesteigung und gegebenem Drehwinkel des Stellelements eine Verdoppelung des Hubes erreicht. Bei gleichem Schraubensinn und unterschiedlichen Gewindesteigungen ist die Änderung des Axialmaßes des Abstandshalters proportional zur Differenz der beiden Gewindesteigungen, so daß eine sehr feinfühlige Einstellung des Abstands ermöglicht wird.

An dem Stellelement können die Gewinde für die beiden Spindeltriebe axial hintereinander oder wahlweise auch auf im wesentlichen gleicher axialer Höhe an einer inneren und einer äußeren Umfangsfläche des Stellelements ausgebildet sein. Die letztgenannte Variante hat den Vorteil, daß das kleinstmögliche Axialmaß des Abstandshalters im Verhältnis zum axialen Verstellweg stark verringert ist.

Die Gewinde der Spindeltriebe können als Innen- und Außengewinde an den Umfangsflächen der Stützkörper und des Stellelements ausgebildet sein. Sie können jedoch auch als Schraubenflächen an den Stirnseiten der Stützkörper und des Stellelements ausgebildet sein.

Die beiden Stützkörper sind vorzugsweise miteinander verrastet, so daß sie unverlierbar zusammengehalten werden. Weiterhin ist es zweckmäßig, mindestens einen der Stützkörper in ein Kunststoffgehäuse einzuspritzen, das bei kleistmöglicher axialer Länge des Abstandshalters beide Stützkörper und auch das Stellelement vollständig aufnimmt. Hierdurch wird die Gefahr einer unabsichtlichen Verstellung des Stellelements verringert und damit die automatische Zuführung der Vorrichtung bei automatisierten Montagevorgängen erleichtert.

Im folgenden werden bevorzugte Ausführungsbeispiele anhand der Zeichnung näher erläutert.

Es zeigen:
- Fig. 1: eine Verbindungsvorrichtung zum Verbinden von zwei plattenförmigen Bauteilen in gelöstem Zustand;
- Fig. 2: die Verbindungsvorrichtung nach Figur 1 nach Fertigstellung der Verbindung;
- Fig. 3: zwei axiale Halbschnitte der Verbindungsvorrichtung in unterschiedlichen Stellungen;
- Fig. 4 und 5: Darstellungen analog zu Figur 3 für abgewandelte Ausführungsformen der Erfindung;
- Fig. 6: eine Stirnansicht einer Verbindungsvorrichtung gemäß einem weiteren Ausführungsbeispiel;
- Fig. 7: einen Schnitt längs der Linie VII-VII in Figur 6;
- Fig. 8: eine perspektivische Explosionsdarstellung von Teilen einer Verbindungsvorrichtung gemäß einem weiteren Ausführungsbeispiel; und
- Fig. 9 und 10: die Teile der Vorrichtung nach Fig. 8 in unterschiedlichen Stellungen.

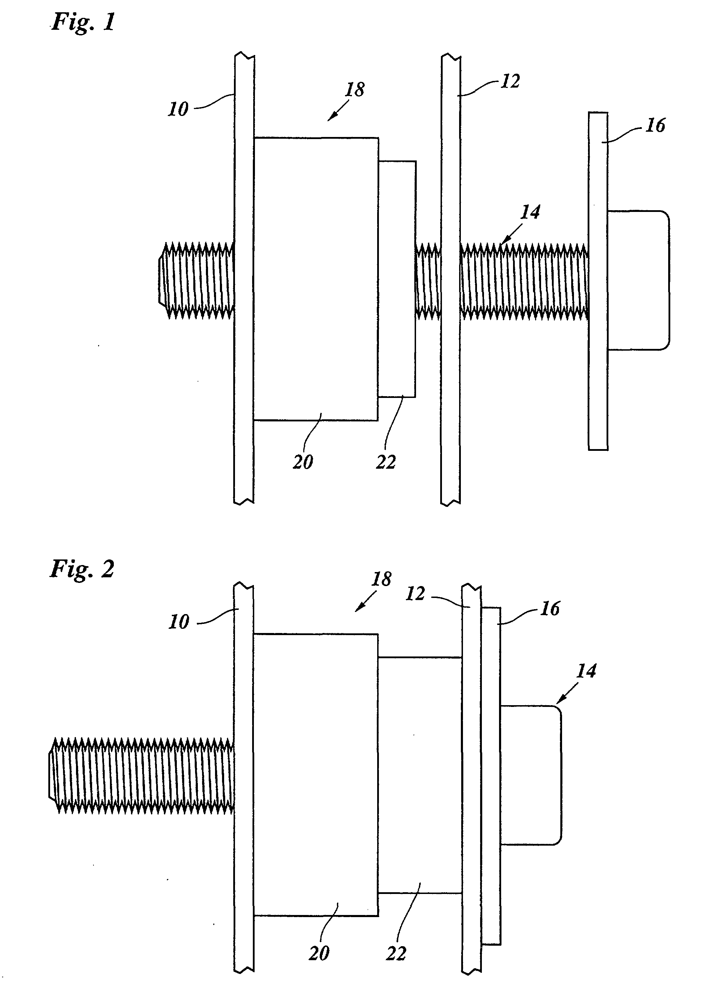

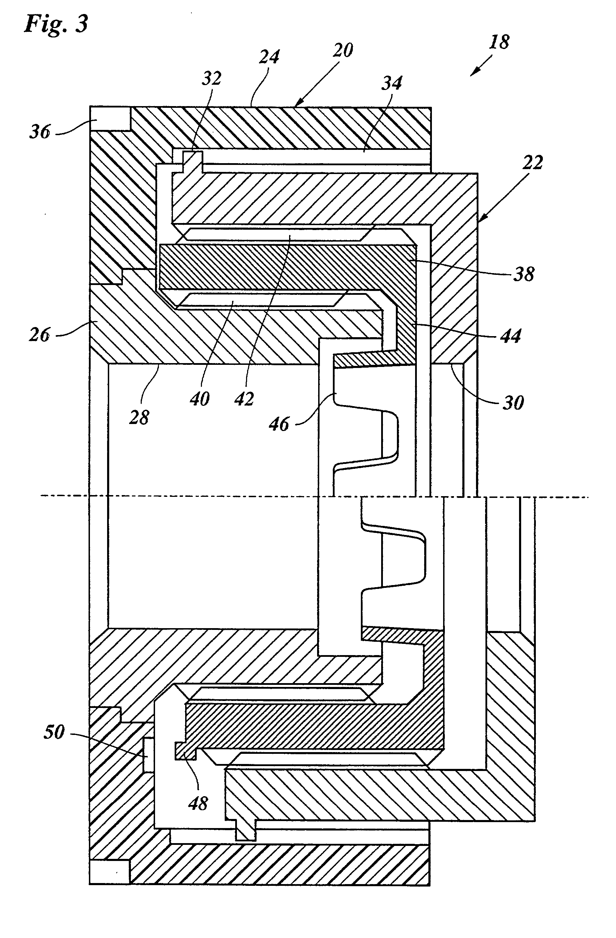

In Figur 1 sind zwei plattenförmige Bauteile 10, 12 gezeigt, die in gewissem Abstand zueinander fest miteinander verbunden werden sollen. Hierzu sind eine Verbindungsschraube 10 mit Unterlegscheibe 16 und ein zwischen den beiden Bauteilen 10, 12 auf der Verbindungsschraube angeordneter Abstandshalter 18 vorgesehen. Der Abstandshalter weist zwei axial gegeneinander verschiebbare Stützkörper 20, 22 auf. Wenn die Verbindungsschraube 14 tiefer in eine nicht gezeigte Gewindebohrung des Bauteils 10 eingeschraubt wird, so wird durch einen Stellmechanismus, der weiter unten anhand der Figur 3 näher erläutert werden wird, der Stützkörper 22 in Richtung auf das Bauteil 12 ausgefahren, bis schließlich das Bauteil 12 fest zwischen dem Stützkörper 22 und der Unterlegscheibe 16 eingespannt ist, wie in Figur 2 gezeigt ist.

In Figur 3 ist der Abstandshalter 18 in einem axialen Schnitt gezeigt. Die obere Hälfte der Figur 3 zeigt den Abstandshalter in der eingefahrenen Position gemäß Figur 1, und die untere Hälfte zeigt ihn in der ausgefahrenen Position gemäß Figur 2.

Der Stützkörper 20 weist ein Gehäuse 24 aus Kunststoff auf, in dem koaxial eine Buchse 26 aus Metall befestigt ist. Die Buchse 26 bildet eine Bohrung 28, durch die die Verbindungsschraube 14 mit geringem Spiel hindurchsteckbar ist.

Der Stützkörper 22 ist ein topfförmiger Körper aus Metall, in dessen Boden eine der Bohrung 28 entsprechende Bohrung 30 für die Verbindungsschraube vorgesehen ist. Der Stützkörper 22 ist axial verschiebbar in dem Gehäuse 24 geführt und durch an seinem äußeren Umfang angeordnete Vorsprünge 32, die in Längsnuten 34 in der Innenwand des Gehäuses 24 eingreifen, gegen Verdrehung relativ zu dem Gehäuse 24 gesichert. Das Gehäuse 24 ist seinerseits drehfest an dem Bauteil 10 gehalten, beispielsweise durch Ausnehmungen 36, in die entsprechende Vorsprünge des Bauteils 10 eingreifen. So mit sind beide Stützkörper 20 und 22 unverdrehbar an dem Bauteil 10 gehalten.

In dem topfförmigen Stützkörper 22 ist ein Gewindering 38 aus Metall angeordnet, der über ein Linksgewinde 40 mit der Buchse 26 und über ein Rechtsgewinde 42 mit dem Stützkörper 22 in Gewindeeingriff steht, so daß zwei Spindeltriebe für die Axialverstellung der beiden Stützkörper gebildet werden. Am in Figur 3 rechten Ende des Gewinderings 38 ist ein nach innen vorspringender Flansch 44 ausgebildet, der am inneren Umfangsrand mehrere federnde Zungen 46 trägt. Wenn die Verbindungsschraube 14 durch den Abstandshalter 18 hindurchgesteckt ist, liegen die Zungen 46 klemmend am Außengewinde der Verbindungsschraube an, so daß der Gewindering 38 reibschlüssig mit der Verbindungsschraube verbunden ist. Wenn die Verbindungsschraube 14 beim Einschrauben in das Bauteil 10 rechts herum gedreht wird, so dreht sich auch der Gewindering 38 relativ zu den Stützkörpern 20 und 22. Aufgrund des Linksgewindes 40 verlagert sich der Gewindering 38 relativ zu dem Stützkörper 20 nach rechts, und aufgrund des Rechtsgewindes 42 verlagert sich der Stützkörper 22 relativ zu dem Gewindering 38 ebenfalls nach rechts. Auf diese Weise wird der Stützkörper 22 aus dem Stützkörper 20 herausgefahren, wie im unteren Teil der Figur 3 zu erkennen ist.

Wenn der Stützkörper 22 an dem Bauteil 12 anschlägt und dieses Bauteil festgehalten wird, beispielsweise durch den Kopf der Verbindungsschraube 14, so kann der Stützkörper 22 nicht weiter ausgefahren und folglich auch der Gewindering 38 nicht weiter gedreht werden. Die Verbindungsschraube 14 rutscht dann an den federnden Zungen 46 durch. Auf diese Weise kann die Verbindungsschraube fest angezogen werden, während das Bauteil 12 in der erreichten Position verbleibt.

Wenn die Verbindungsschraube links herum aus dem Bauteil 10 herausgeschraubt wird, fährt der Stützkörper 22 wieder in die eingefahrene Position zurück. Bei der letzten Gewindeumdrehung vor Erreichen der inneren Endlage tritt ein an dem Gewindering 38 ausgebildeter Vorsprung 48 (unten in Figur 3 gezeigt) in eine entsprechende Ausnehmung 50 des Gehäuses 24 ein. Auf diese Weise wird ein Anschlag gebildet, der ein Weiterdrehen des Gewinderings 38 und somit ein festes Verspannen des Gewinderings an der Buchse 26 verhindert. Der Gewindering 38 bleibt daher stets so leichtgängig, daß er beim Einschrauben der Verbindungsschraube 14 reibschlüssig gedreht werden kann.

In einer modifizierten Ausführungsform kann anstelle des Linksgewindes 40 ein Rechtsgewinde vorgesehen sein, dessen Steigung jedoch kleiner ist als die des Rechtsgewindes 42. In der eingefahrenen Position des Stützkörpers 22 weist in diesem Fall der Gewindering 38 einen gewissen Abstand zum Boden des Gehäuses 24 auf. Wenn dann die Verbindungsschraube 14 rechts herum eingeschraubt wird, bewegt sich der Gewindering 38 nach links in Figur 3, aber der Stützkörper 22 bewegt sich relativ zu dem Gewindering um einen größeren Weg nach rechts, so daß sich insgesamt eine geringe Ausfahrbewegung des Stützkörpers 22 nach rechts ergibt.

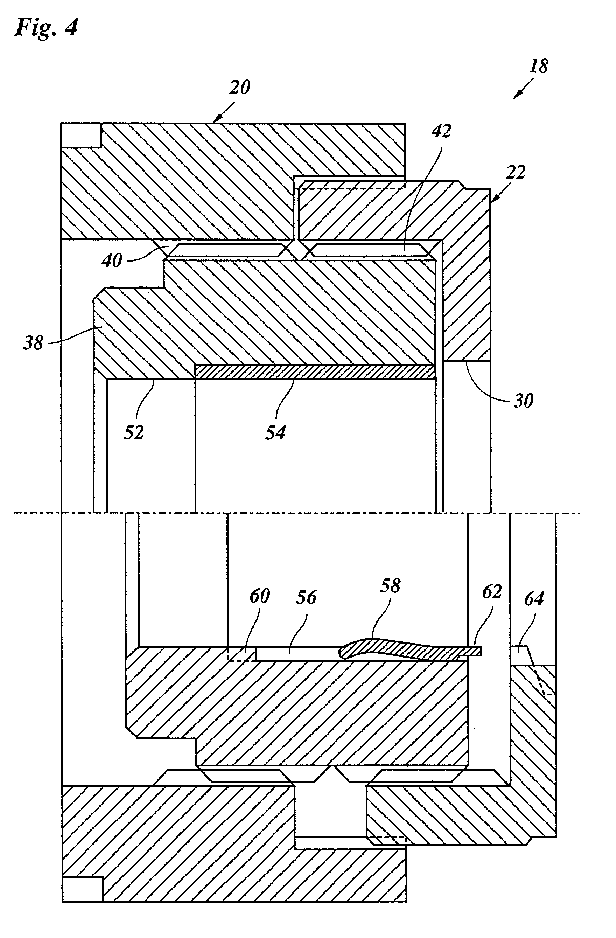

Figur 4 zeigt eine Ausführungsform, bei der das Linksgewinde 40 und das Rechtsgewinde 42 in unterschiedlichen axialen Abschnitten auf der Außenfläche des Gewinderings 38 ausgebildet sind. Der Gewindering 38 bildet eine abgestufte Bohrung 52, in die ein Ring 54 aus Federstahl eingepreßt ist. Aus einem längsverlaufenden Schlitz 56 des Ringes 54 ist eine federnde Zunge 58 herausgedrückt, die klemmend am Umfang der Verbindungsschraube 14 anliegt. An der Schulter der gestuften Bohrung 52 ist ein vorspringender Teil 60 ausgebildet, der etwas in die Nut 56 hereinragt und so den Ring 54 drehfest mit dem Gewindering 38 verbindet.

Ein Anschlag zur Begrenzung der Drehbewegung des Gewinderings 38 wird hier durch einen Vorsprung 62 an dem Ring 54 gebildet, der an einem nach innen in die Bohrung 30 ragenden Vorsprung 64 des Stützkörpers 22 anschlägt.

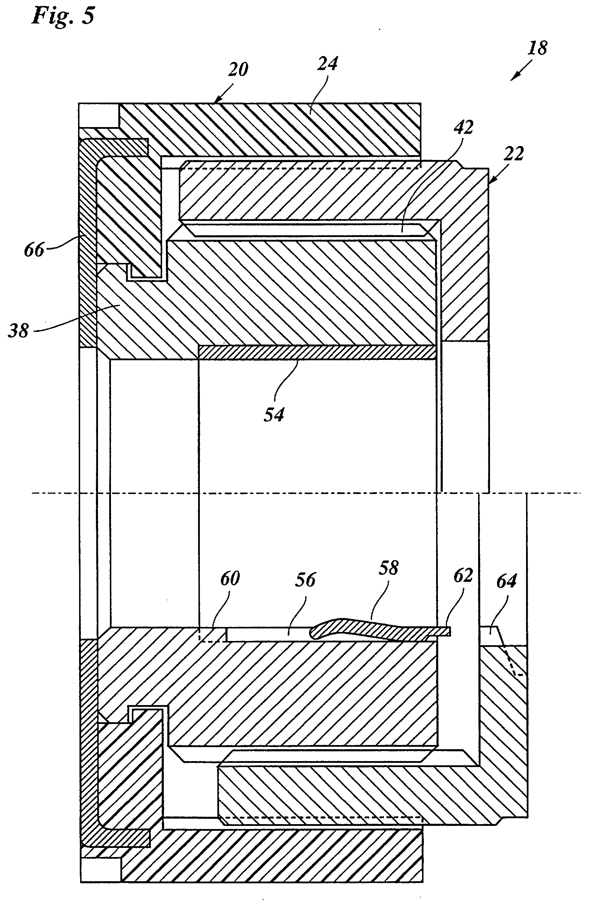

Figur 5 zeigt eine Ausführungsform, bei der der Gewindering 38 axialfest und drehbar in dem Stützkörper 20 gehalten ist und nur über ein Rechtsgewinde 42 mit dem Stützkörper 22 in Gewindeeingriff steht. Das in Figur 5 linke Ende des Gewinderings 38 stützt sich reibungsarm an einer fest mit dem Gehäuse 24 verbundenen Metallplatte 66 ab.

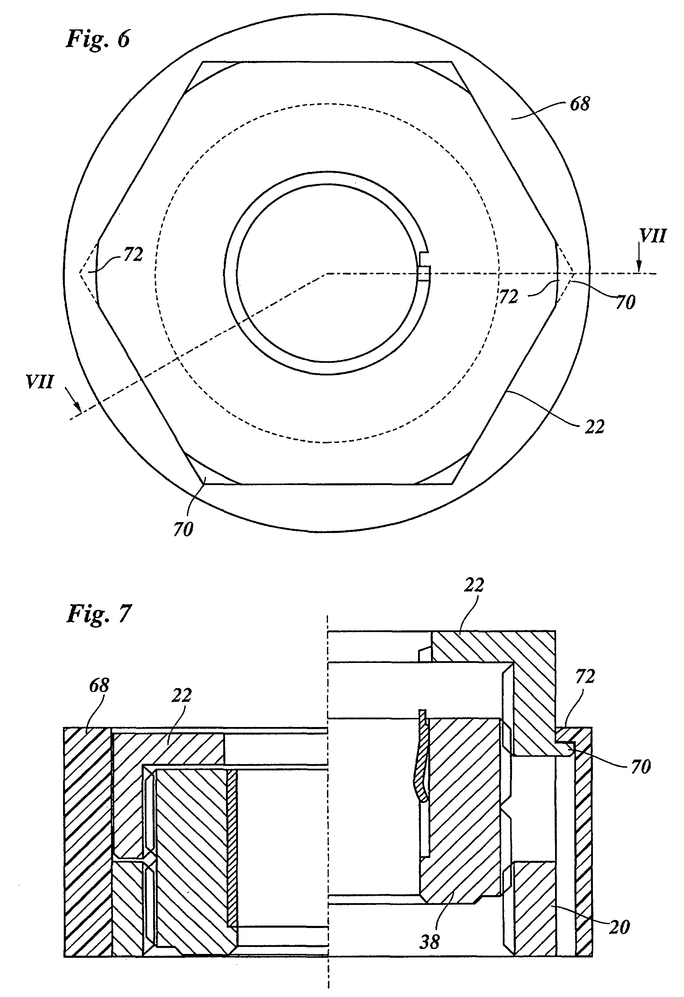

Figuren 6 und 7 zeigen ein Ausführungsbeispiel, bei dem der aus Metall bestehende Stützkörper 20 in ein Gehäuse 68 aus Kunststoff eingespritzt ist. Bei minimalem Axialmaß (links in Figur 7) sind beide Stützkörper 20, 22 und der Gewindering 38 berührungsgeschützt in dem Gehäuse 68 aufgenommen. Der Stützkörper 28 hat hier die Form eines Außensechskants, dessen vorspringende Kanten auf dem größten Teil der Länge abgedreht sind, so daß lediglich sechs vorspringende Zähne 70 am inneren Ende des Stützkörpers stehenbleiben. Die Innenkontur des Gehäuses 68 ist an die Außenkontur des Stützkörpers 22 angepaßt, so daß der Stützkörper verdrehsicher in dem Gehäuse geführt ist. Am in Figur 7 oberen Ende bildet das Gehäuse 68 zwei nach innen vorspringende Lippen 72, die zwei der Zähne 70 übergreifen. Die Zähne 70 und die Lippen 72 sind derart abgefast, daß sich der Stützkörper 22 von oben in das Gehäuse 68 einklipsen läßt und dann unverlierbar in dem Gehäuse gehalten ist.

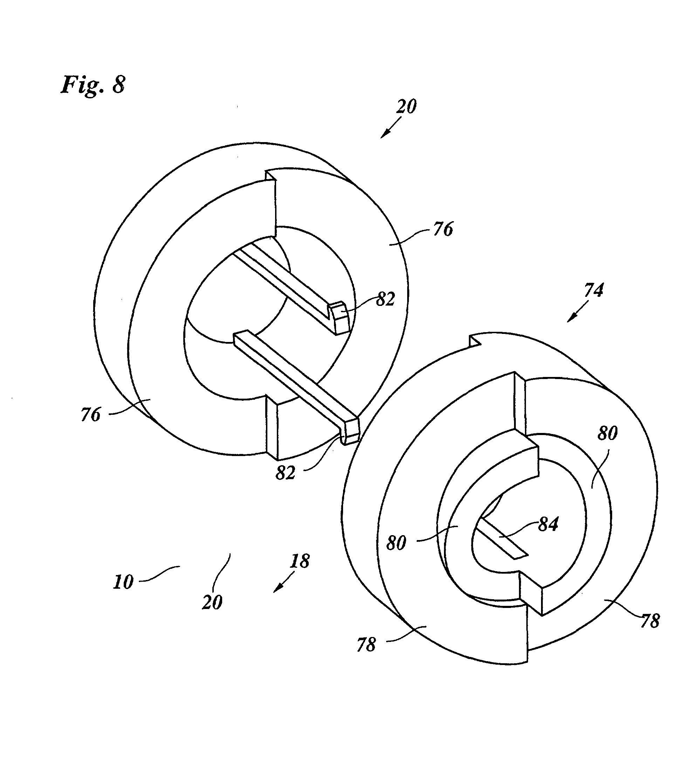

Figuren 8 bis 10 zeigen ein Ausführungsbeispiel, bei dem die Spindeltriebe nicht durch Innen- und Außengewinde, sondern durch Schraubenflächen an den Stirnseiten der Stützkörper und des Stellelements gebildet werden.

Figur 8 zeigt in einer Explosionsdarstellung den ringförmigen Stützkörper 20 und ein ringförmiges Stellelement 74, das in seiner Funktion dem Gewindering 38 bei den vorherigen Ausführungsbeispielen entspricht. Das Stellelement 74 ist symmetrisch in Bezug auf eine senkrecht auf der Achse stehende Symmetrieebene ausgebildet. Der nicht gezeigte Stützkörper 22 ist bezüglich dieser Symmetrieebene spiegelbildlich zu dem Stützkörper 20 ausgebildet.

Der Stützkörper 20 weist zwei schraubenförmige Steigungsflächen 76 auf, die sich jeweils über einen Winkel von 180° erstrecken und mit dazu komplementären Schraubenflächen 78 des Stellelements 74 zusammenwirken. Das Stellelement 74 weist radial innerhalb der Steigungsflächen 78 zwei weitere Steigungsflächen 80 auf, die in Bezug auf die Steigungsflächen 78 den entgegengesetzten Schraubensinn und die doppelte Steigung haben.

Am inneren Umfang des Stützelements 20 sind zwei Halteklauen 82 ausgebildet, die beim Zusammenbau des Stellelements und der Stützkörper durch das Stellelement 74 hindurchgreifen und mit ihren hakenförmig gekröpften Enden hinter den Steigungsflächen 80 einrasten.

Die entsprechenden Halteklauen des nicht gezeigten Stützkörpers 22 liegen jeweils unmittelbar neben der zugehörigen Halteklaue 82, so daß die Winkelabstände zwischen den paarweise nebeneinanderliegenden Halteklauen fast 180° betragen. An der Innenfläche des Stellelements 74 ist eine Feder 84 angeordnet, die innerhalb des Zwischenraums zwischen den Paaren der Halteklauen reibschlüssig am Gewinde der Verbindungsschraube 14 anliegt. Die Halteklauen 82 wirken so zugleich als Anschläge, die den Stellbereich des Stellelements 74 auf etwas weniger als 180° begrenzen.

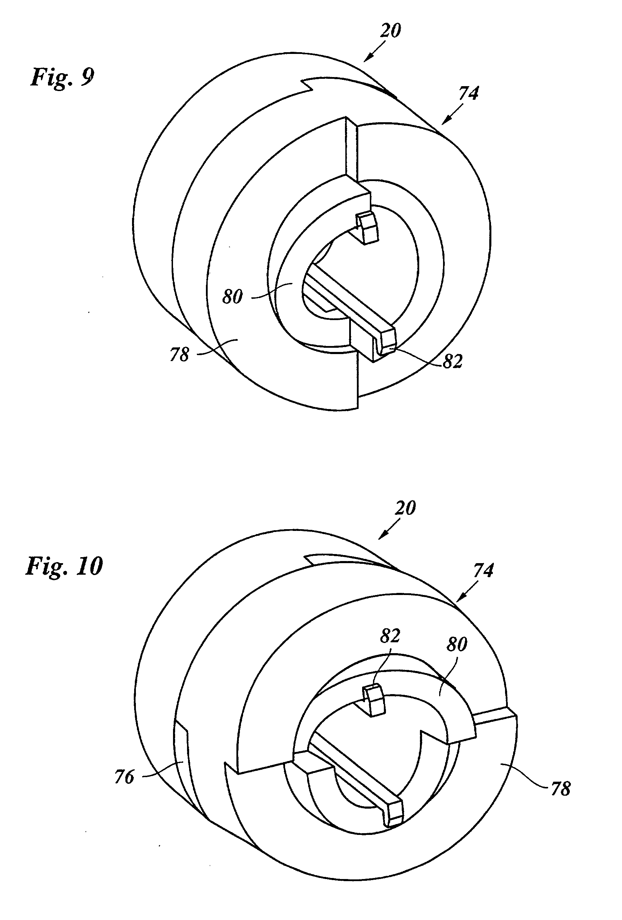

Figur 9 zeigt den Zustand, in dem der Stützkörper 20 und das Stellelement 74 in den in Figur 8 gezeigten Winkelstellungen miteinander verrastet sind. Figur 10 zeigt den Zustand, in dem das Stellelement um 45° verdreht worden ist. Durch die Wirkung der aneinander anliegenden Steigungsflächen 76 und 78 hat sich dabei das Axialmaß des Abstandshalters vergrößert. Die Höhe der Schraubenflächen 80 hat jedoch um denselben Betrag abgenommen, so daß die Halteklauen 82 nach wie vor an diesen Schraubenflächen anliegen. Wenn das Stellelement 74 anschließend wieder im Gegenuhrzeigersinn gedreht wird, so bewirken die Steigungsflächen 80 und die Halteklauen 82, daß der Stützkörper 20 und der nicht gezeigte Stützkörper 22 wieder in Axialrichtung zusammengezogen werden, so daß die Steigungsflächen 76 und 78 stets miteinander in Anlage bleiben.

Eine mögliche und in gewisser Hinsicht vorteilhafte Abwandlung des in Figuren 8 bis 10 gezeigten Prinzips besteht darin, daß die Halteklauen 82 nicht an den Stützkörpern 20 und 22, sondern in entgegengesetzte Richtungen vorspringend an dem Stellelement 74 angeordnet werden. Die zugehörigen Steigungsflächen, die den Steigungsflächen 80 in Figur 8 entsprechen, liegen dann versenkt in den voneinander abgewandten Stirnflächen der beiden Stützkörper 20 und 22. Diese Variante hat den Vorteil, daß der Drehbereich des Stellelements 74 und der daran angeordneten Feder 84 nicht durch die Halteklauen 82 begrenzt wird. Außerdem können die Halteklauen und die Feder in einem Stück als ein Bauteil hergestellt werden, das in das ringförmige Stellelement 74 eingepreßt oder an dieses angespritzt ist.

Generell hat die Bauweise mit an den Stirnseiten der Stützkörper und des Stellelements ausgebildeten Steigungsflächen den Vorteil, daß eine kostengünstigere Herstellung ermöglicht wird, da das aufwendige Gewindeschneiden entfällt.

In einer weiter vereinfachten Ausführungsform können die Steigungsflächen 80 und die Halteklauen 82 auch ganz entfallen. In diesem Fall können die Stützkörper 20, 22 zwar nicht mehr axial zusammengezogen aber immer noch axial gespreizt werden.

Eine Verdrehsicherung der Stützkörper 20 und 22 läßt sich auf dieselbe Weise wie bei den zuvor beschriebenen Ausführungsbeispielen erreichen, beispielsweise durch Ausbildung eines der Stützkörper als Außensechskant, der in einem mit dem anderen Stützkörper verbundenen Gehäuse geführt ist.

## Patentansprüche

1. Vorrichtung zum Verbinden von Bauteilen, mit einer Verbindungsschraube (14) und einem zwischen den zu verbindenden Bauteilen (10, 12) angeordneten, von der Verbindungsschraube durchsetzten Abstandshalter (18), der mit Hilfe eines durch die Einschraubbewegung der Verbindungsschraube angetriebenen Stellelements (38; 74) in der Länge verstellbar ist, **dadurch gekennzeichnet, daß** der Abstandshalter (18) zwei drehfest an einem (10) der Bauteile gehaltene, axial gegeneinander verschiebbare Stützkörper (20, 22) aufweist, die sich jeweils an einem der Bauteile (10, 12) abstützen und von denen mindestens einer zusammen mit dem Stellelement (38; 74) einen Spindeltrieb (40; 42; 76, 78) bildet.

2. Vorrichtung nach Anspruch 1, **dadurch gekennzeichnet, daß** das Stellelement (38) mit je einem der beiden Stützkörper (20, 22) zwei Spindeltriebe (40, 42) bildet, die sich in ihrer Gewindesteigung und/oder ihrem Schraubensinn unterscheiden.

3. Vorrichtung nach Anspruch 2, **dadurch gekennzeichnet, daß** das Stellelement ein Gewindering (38) ist, der über ein den ersten Spindeltrieb bildendes Innengewinde (Linksgewinde 40) mit dem ersten Stützkörper (20) in Gewindeeingriff steht und über ein den zweiten Spindeltrieb bildendes Außengewinde (Rechtsgewinde 42) mit dem zweiten Stützkörper (22) in Gewindeeingriff steht.

4. Vorrichtung nach Anspruch 2, **dadurch gekennzeichnet, daß** das Stellelement ein Gewindering (38) ist, der in einem ersten axialen Abschnitt ein Außengewinde (Linksgewinde 40) aufweist, das den Spindeltrieb für den ersten Stützkörper (20) bildet, und in einem anderen axialen Abschnitt ein Außengewinde (Rechtsgewinde 42) aufweist, das den Spindeltrieb für den zweiten Stützkörper (22) bildet.

5. Vorrichtung nach einem der vorstehenden Ansprüche, **dadurch gekennzeichnet, daß** das Stellelement (38) durch mindestens eine federnde Zunge (46; 58) auf der Verbindungsschraube (14) gehalten ist.

6. Vorrichtung nach einem der vorstehenden Ansprüche, **dadurch gekennzeichnet, daß** einer der Stützkörper (20) ein Gehäuse (24) bildet, das auf der Innenseite mit axial verlaufenden Nuten (34) zur Führung und Verdrehsicherung des anderen Stützkörpers (22) versehen ist.

7. Vorrichtung nach einem der Ansprüche 1 bis 5, **dadurch gekennzeichnet, daß** einer der Stützkörper (20) in ein Gehäuse (68) aus Kunststoff eingespritzt ist, das sich mindestens über die gesamte axiale Länge des Abstandshalters (18) erstreckt, wenn dieser auf seine minimale Länge eingestellt ist.

8. Vorrichtung nach Anspruch 6 oder 7, **dadurch gekennzeichnet, daß** einer der Stützkörper (22) einen Außensechskant bildet und in einer entsprechend angepaßten Innenkontur des Gehäuses (68) geführt ist.

9. Vorrichtung nach einem der vorstehenden Ansprüche, **dadurch gekennzeichnet, daß** die beiden Stützkörper (20, 22) miteinander verrastet sind.

10. Vorrichtung nach den Ansprüchen 8 und 9, **dadurch gekennzeichnet, daß** der Außensechskant des Stützkörpers (22) durch vorspringende Zähne (70) an einem Ende dieses Stützkörpers gebildet wird und daß an der Innenkontur des Gehäuses (68) mindestens eine nach innen vorspringende Lippe (72) ausgebildet ist, die einen der Zähne (70) übergreift.

11. Vorrichtung nach Anspruch 1, **dadurch gekennzeichnet, daß** der Spindeltrieb durch an den Stirnseiten der Stützkörper (20, 22) und des Stellelements (74) ausgebildete Steigungsflächen (76, 78) gebildet wird.

12. Vorrichtung nach Anspruch 11, **dadurch gekennzeichnet, daß** an mindestens einem der Stützkörper (20, 22) oder dem Stellelement (74) Halteklauen (82) ausgebildet sind, die hinter Steigungsflächen (80) des jeweiligen anderen Elements (Stellelement 74 bzw. Stützkörper 20, 22) greifen und eine Drehbewegung des Stellelements (74) in eine axiale, aufeinander zu gerichtete Bewegung der Stützkörper (20, 22) umsetzen.

## Claims

1. Device for connecting structural components, having a connecting screw (14) and a spacer (18) which is disposed between the structural components (10, 12) to be connected and through which the connecting screw extends and which can be adjusted in length by means of an adjusting member (38; 74) driven by the screwing-in movement of the connecting screw, **characterised in that** the spacer (18) has two support bodies (20, 22) which are held in a rotationally secure manner on one (10) of the structural components and which are axially displaceable towards each other and which are each supported on a respective one of the structural components (10, 12) and at least one of which forms a spindle drive (40; 42; 76, 78) together with the adjusting member (38; 74).

2. Device according to claim 1, **characterised in that** the adjusting member (38) forms with the two support bodies (20, 22) two respective spindle drives (40, 42) which differ in terms of their thread pitch and/or their sense of helix.

3. Device according to claim 2, **characterised in that** the adjusting member is a threaded ring (38) which is in threaded engagement with the first support body (20) by way of an internal thread (left-hand thread 40) forming the first spindle drive and which is in threaded engagement with the second support body (22) by way of an external thread (right-hand thread 42) forming the second spindle drive.

4. Device according to claim 2, **characterised in that** the adjusting member is a threaded ring (38) which, in a first axial portion, has an external thread (left-hand thread 40) forming the spindle drive for the first support body (20) and, in a further axial portion, has an external thread (right-hand thread 42) forming the spindle drive for the second support body (22).

5. Device according to any one of the preceding claims, **characterised in that** the adjusting member (38) is held on the connecting screw (14) by means of at least one resilient tongue (46; 58).

6. Device according to any one of the preceding claims, **characterised in that** one of the support bodies (20) forms a housing (24) which is provided on the inside with axially extending grooves (34) for guiding and securing in rotation the other support body (22).

7. Device according to any one of claims 1 to 5, **characterised in that** one of the support bodies (20) is inserted into a housing (68) of plastics material which extends at least over the entire axial length of the spacer (18) when the latter is adjusted to its minimum length.

8. Device according to claim 6 or 7, **characterised in that** one of the support bodies (22) forms an externally hexagonal member and is guided in a correspondingly adapted inner contour of the housing (68).

9. Device according to any one of the preceding claims, **characterised in that** the two support bodies (20, 22) are locked to each other.

10. Device according to claims 8 and 9, **characterised in that** the externally hexagonal member of the support body (22) is formed by projecting teeth (70) at one end of that support body and **in that** at least one inwardly projecting lip (72) which engages over one of the teeth (70) is formed on the inner contour of the housing (68).

11. Device according to claim 1, **characterised in that** the spindle drive is formed by inclined faces (76, 78) formed at the ends of the support bodies (20, 22) and of the adjusting member (74).

12. Device according to claim 11, **characterised in that** holding claws (82) are formed on at least one of the support bodies (20, 22) or on the adjusting member (74), which holding claws engage behind inclined faces (80) of the respective other element (adjusting member 74 or support body 20, 22) and convert a rotational movement of the adjusting member (74) into an axial movement of the support bodies (20, 22) towards each other.

## Revendications

1. Dispositif de liaison d'éléments de construction, comportant une vis de liaison (14) et une entretoise (18) disposée entre les éléments de construction (10, 12) à relier et traversée par la vis de liaison, laquelle entretoise est réglable en longueur à l'aide d'un élément de réglage (38 ; 74) entraîné par le mouvement de vissage de la vis de liaison, **caractérisé en ce que** l'entretoise (18) comporte deux corps d'appui (20, 22) maintenus solidaires en rotation sur l'un (10) des éléments de construction et pouvant coulisser axialement l'un par rapport à l'autre, qui prennent appui chacun sur l'un des éléments de construction (10, 12) et dont l'un au moins forme un mécanisme à vis (40 ; 42 ; 76 ; 78) avec l'élément de réglage (38 ; 74).

2. Dispositif selon la revendication 1, **caractérisé en ce que** l'élément de réglage (38) forme avec chacun des deux corps d'appui (20, 22) deux mécanismes à vis (40, 42) dont le pas et/ou le sens de vissage diffèrent.

3. Dispositif selon la revendication 2, **caractérisé en ce que** l'élément de réglage est une bague filetée (38) qui est en engagement de vissage avec le corps d'appui (20), par un taraudage (filetage à gauche (40)) formant le premier mécanisme à vis, et est en engagement de vissage avec le deuxième corps d'appui (22), par un filetage extérieur (filetage à droite 42) formant le deuxième mécanisme à vis.

4. Dispositif selon la revendication 2, **caractérisé en ce que** l'élément de réglage est une bague filetée (38) qui présente, dans un premier tronçon axial, un filetage extérieur (filetage à gauche 40) qui forme le mécanisme à vis pour le premier corps d'appui (20), et qui présente, dans un autre tronçon axial, un filetage extérieur (filetage à droite 42) qui forme le mécanisme à vis pour le deuxième corps d'appui (22).

5. Dispositif selon l'une des revendications précédentes, **caractérisé en ce que** l'élément de réglage (38) est maintenu par au moins une languette élastique (46 ; 58) sur la vis de liaison (14).

6. Dispositif selon l'une des revendications précédentes, **caractérisé en ce que** l'un des corps d'appui (20) forme un boîtier (24) qui est pourvu, sur sa face intérieure, de rainures (34) s'étendant axialement pour le guidage et le blocage en rotation de l'autre corps d'appui (22).

7. Dispositif selon l'une des revendications 1 à 5, **caractérisé en ce que** l'un des corps d'appui (20) est injecté dans un boîtier (68) en matière plastique, qui s'étend au moins sur toute la longueur axiale de l'écarteur (18) lorsque celui-ci est réglé sur sa longueur minimale.

8. Dispositif selon la revendication 6 ou 7, **caractérisé en ce que** l'un des corps d'appui (22) forme un six pans mâle et est guidé dans un contour intérieur adapté en correspondance du boîtier (68).

9. Dispositif selon l'une des revendications précédentes, **caractérisé en ce que** les deux corps d'appui (20, 22) s'accrochent l'un à l'autre.

10. Dispositif selon les revendications 8 et 9, **caractérisé en ce que** le six pans mâle du corps d'appui (22) est formé par des dents saillantes (70) à une extrémité de ce corps d'appui, et **en ce que** sur le contour intérieur du boîtier (68) est réalisée au moins une lèvre (72) faisant saillie vers l'intérieur qui recouvre l'une des dents (70).

11. Dispositif selon la revendication 1, **caractérisé en ce que** le mécanisme à vis est formé par des surfaces de rampe (76, 78) réalisées sur les faces frontales des corps d'appui (20, 22) et de l'élément de réglage (74).

12. Dispositif selon la revendication 11, **caractérisé en ce que** sur au moins l'un des corps d'appui (20, 22) ou sur l'élément de réglage (74)sont réalisées des griffes de retenue (82) qui s'engagent derrière des surfaces de rampe (80) de l'autre élément respectif (élément de réglage 74 ou corps d'appui 20, 22) et transforment un mouvement de rotation de l'élément de réglage (74) en un mouvement axial des corps d'appui (20, 22) dirigés l'un vers l'autre.
